# EUROPÄISCHE PATENTANMELDUNG

(11) **EP 0 809 932 A1**
(43) Veröffentlichungstag der Anmeldung: **03.12.1997**
(21) Anmeldenummer: 96108418.3
(22) Anmeldetag: 28.05.1996
(51) Int. Cl.: A01G 9/12

(54) **Wiederverwendbare und erweiterungsfähige Steckverbindungen zur Stützung von Pflanzen**

(71) Anmelder: Idink, Hans, 45481 Mühlheim a.d.Ruhr (DE); Idink, Lothar, 47055 Duisburg (DE)
(72) Erfinder: Idink, Hans, 45481 Mühlheim a.d.Ruhr (DE); Idink, Lothar, 47055 Duisburg (DE)

(57) **Zusammenfassung**

Wiederverwendbare und erweiterungsfähige Steckverbindungen aus Kunststoff zur Stützung von Pflanzen.

Bei der Erfindung handelt es sich um einen Bausatz aus Kunststoff, bestehend aus 4 Stück ins Erdreich zu treibende Hohlprofile mit oben angeformten Zapfen ( Abb. 5 ), die mit gelochten Steckleisten ( Abb. 6 ) verbunden werden. Dabei ist bei quadratischer Anwendung ( Abb. 1 ) eine innenseitige Abmessung zwischen 4 bis 48cm möglich.

Die Höhe ist durch entsprechendes Eindrücken ins Erdreich variierbar.

Zum Schutz der Zapfen ist erforderlichenfalls eine Einschlaghilfe ( Abb. 7 ) vorgesehen.

Der Bausatz läßt auch die dreischenkelige oder reihenweise Verwendung zu.

Mit jedem weiteren Bausatz ist das Lichtmaß in alle Richtungen, Formen und Größen erweiterungsfähig und/oder nach oben aufstockbar. (Abb. 2 + 3 + 4 )

Jeweils eine Verkaufseinheit (VE) wird platzsparend und umweltfreundlich verpackt ( Abb. 8 )

## Beschreibung

### Beschreibung der Erfindung:

Beispiel aus dem Gebiet der Gartenkultur.

### Bezeichnung der Erfindung:

Wiederverwendbare und erweiterungsfähige Steckverbindungen zur Stützung von Pflanzen.

### Technisches Gebiet, auf das sich die Erfindung bezieht:

Die Erfindung bezieht sich auf die Standsicherung von Pflanzen, Blumen o.ä., deren Standfestigkeit und Wachstum eine Stützung angezeigt erscheinen lassen.

Die Konstruktion läßt mit einem Bausatz eine bis zu vierseitige Montage mit Schenkeln von 4 bis ca. 48cm Innenmaß zu.

Die waagerechte Höhe der Schenkel ist je nach Eintreiben in das Erdreich variierbar.

Mit weiteren Bausätzen ist das Lichtmaß beliebig in alle Richtungen, Formen und Größen ausdehnbar und/oder nach oben aufstockbar.

Die Gewächse können somit je nach Wachstum und Stützungsbedürfnis in einer oder mehreren Ebenen den erforderlichen Halt bekommen.

### Darstellung der Erfindung:

In das Erdreich zu treibende Hohlprofile mit oben angeformten Zapfen zur Aufnahme der gelochten Steckleisten. Mit Einschlaghilfe zur Schonung der Zapfen.

Material aus witterungsbeständigem Kunststoff, grün, alternativ braun.

### Vorteile der Erfindung:

Leicht anzuwendender Bausatz, bestehend aus 4 Senkrecht-Hohlprofilen und 4 Steckleisten.

Problemlose Montage, im Regelfall ohne Hilfsmittel, gegebenenfalls mit Einschlaghilfe.

Witterungsbeständig, lange haltbar.

Gepflegtes Erscheinungsbild.

Wiederverwendbar.

Individuell veränderbare Abmessungen, auch während der Wachstumsphase.

Leicht zu reinigen.

Material recycelfähig.

Unschädlich für Mensch, Tier und Pflanzen.

Durch weitere Bausätze erweiterungsfähig in Breite, Form und Höhe.

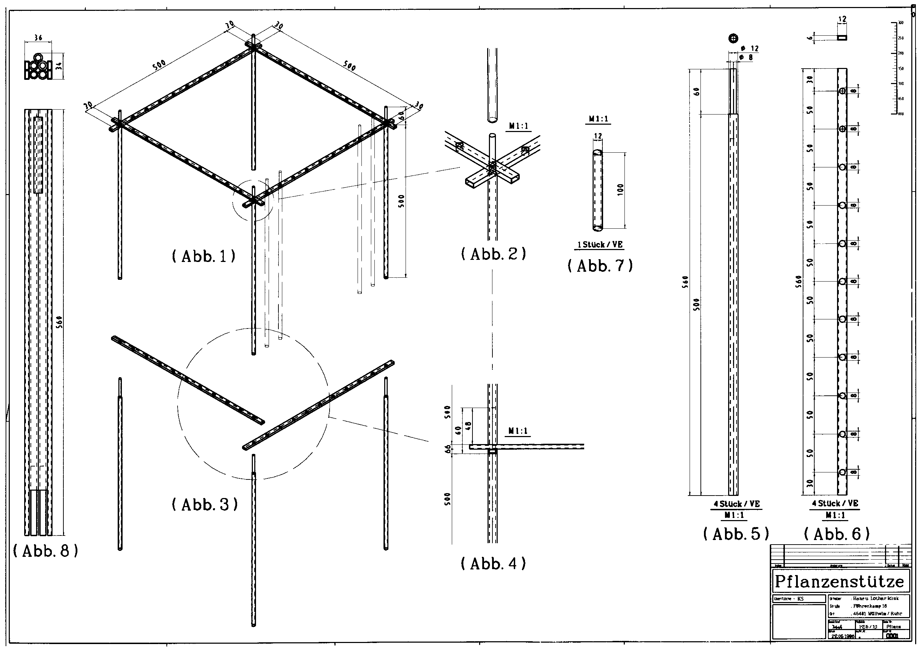

## Patentansprüche

1. Wiederverwendbare und erweiterungsfähige Steckverbindungen aus witterungsbeständigem Kunststoff zur Stützung von Pflanzen, bestehend aus Hohlprofilen mit oben angeformten Zapfen ( 5 ) und gelochten Steckleisten ( 6 ).
Die Hohlprofile werden in das Erdreich eingedrückt. Durch die Eindringtiefe kann die Höhe der waagerecht aufliegenden Steckleisten bestimmt werden. Zur Schonung der Zapfen dient erforderlichenfalls eine Einschlaghilfe ( 7 ).
Ein Bausatz ermöglicht quadratische ( 1 ) oder dreischenkelige Pflanzenstützen zu errichten. Das jeweilige Innenmaß ist durch die Lochung der Steckleisten bis zu 48 cm wählbar. Bei Bedarf ist die Pflanzenstütze durch weitere Bausätze in alle Richtungen, Formen und Größen und/oder nach oben erweiterungsfähig. Auch die reihenweise Verwendung ist möglich.
